# EUROPEAN PATENT APPLICATION

(11) **EP 4 502 766 A1**
(43) Date of publication of application: **05.02.2025**
(21) Application number: 23193838.2
(22) Date of filing: 29.08.2023
(51) Int. Cl.: G06F 3/01, G06F 1/16, G06F 1/3203, G06F 1/3234, G06F 1/3287, G06F 3/03, G06F 3/0354, G06F 3/038, G06F 1/3231

(54) **ADAPTED CONTROL BEHAVIOR UTILIZING GAZE LOCATION**

(30) Priority: 31.07.2023 US 202363529825 P
(71) Applicant: Koninklijke Philips N.V., 5656 AG Eindhoven (NL)
(72) Inventor: TUINHOUT, Jelle Jeroen, Eindhoven (NL); KUHLMANN, Daan, Eindhoven (NL)
(74) Representative: Philips Intellectual Property & Standards

(57) **Abstract**

A user input system (100), comprising: a handheld computer (110) comprising a display (120); an eye-tracking camera (140) configured to obtain tracking information about one or more eyes of a user of the handheld computer; an eye-tracking algorithm (262) configured to determine, based on the tracking information, when the user of the handheld computer is looking at the screen and/or when the user is not looking at the screen; and an input modality (170) positioned on a reverse side of the handheld computer, the input modality configured to receive a user input from a finger or hand of the user; wherein user input to the input modality is restricted or blocked when the eye-tracking algorithm determines that the user is not looking at the screen, and/or wherein the user input to the input modality is enabled only when the eye-tracking algorithm determines that the user is looking at the screen.

## Description

### FIELD OF THE INVENTION

The present disclosure is directed generally to systems for gaze-based control of a handheld computing device.

### BACKGROUND OF THE INVENTION

Handheld computing devices have become ubiquitous for a wide variety of different applications. Many of these applications require or involve holding the handheld device with one hand, often while the user's other hand is actively engaged. Since both hands are occupied, it can be difficult to interact with the display of the handheld computing device, such as via a touchscreen or other interaction mechanism.

In a setting such as ultrasound, for example, a user may have a handheld tablet with a connected transducer utilized to perform the ultrasound. Thus, the user holds the tablet with one hand and manipulates the transducer with the other hand. This makes it difficult for the user to interact with the touchscreen of the display when necessary to access features on the tablet. Often, the user puts the tablet on the bedside next to the patient, which results in awkward interaction and viewing angles.

In a setting where a user is on the move, such as in an ambulance rushing to the emergency department or on the go in rural areas, it is time consuming and often impractical or impossible to hold, position, and/or interact with the tablet while interacting with the patient. There are many other scenarios where a user is holding a handheld computing device with one hand and manipulating something with the other hand (or perhaps does not have another hand or cannot use their other hand), which makes it challenging to interact with the screen or display of the device.

### SUMMARY OF THE INVENTION

Thus, there is a continued need for methods and systems that help the user interact with the handheld computing device while both hands are occupied, while avoiding accidental or unintended interactions with the device. Various embodiments and implementations described or otherwise envisioned herein are directed to a method and system for gaze-based control of a handheld computing device. A user input system includes a handheld computer comprising a display, an eye-tracking camera that obtains tracking information about one or more eyes of a user of the handheld computer, and an eye-tracking algorithm configured to analyze the gaze of the user. The system further includes an input modality positioned on a reverse side of the handheld computer configured to receive a user input from a finger or hand of the user. The user input to the input modality is restricted or blocked when the eye-tracking algorithm determines that the user is not looking at the screen.

The invention is defined by the independent claims. The dependent claims define advantageous embodiments.

According to an aspect, a user input system is provided. The system includes a handheld computer comprising a display; an eye-tracking camera configured to obtain tracking information about one or more eyes of a user of the handheld computer; an eye-tracking algorithm configured to determine, based on the tracking information, when the user of the handheld computer is looking at the screen and/or when the user is not looking at the screen; and an input modality positioned on a reverse side of the handheld computer, the input modality configured to receive a user input from a finger or hand of the user; wherein user input to the input modality is restricted or blocked when the eye-tracking algorithm determines that the user is not looking at the screen. The eye tracking algorithm may be executed on a processor of the handheld computer. The eye tracking algorithm may be stored on a memory of the handheld computer. The processor and/or memory of the handheld computer may be in communication with each other and with other sub-systems of the handheld computer system such as the eye tracking camera and the input modality.

According to an embodiment, the user input system is utilized for ultrasound control or analysis.

According to an embodiment, the system further comprises a grip mechanism enabling the user to hold the handheld computer with one hand, the one hand positioned to interact with the input modality.

According to an embodiment, the eye-tracking camera is an infrared camera.

According to an embodiment, the input modality is a trackball, trackpad, button, touchpad, or rotary.

According to an embodiment, the system further comprises a haptic engine configured to provide haptic feedback to user input to the input modality.

According to an embodiment, the haptic engine is configured to only provide haptic feedback in response to user input when the eye-tracking algorithm determines that the user is looking at the screen.

According to an embodiment, the eye-tracking algorithm is further configured to determine, when the user of the handheld computer is looking at the screen, a specific portion of the screen the user is looking at, and wherein the user input to the input modality is enabled only when the user is looking at a predetermined specific portion of the screen.

According to another aspect is a user input system. The user input system includes a handheld computer comprising a display; an eye-tracking camera configured to obtain tracking information about one or more eyes of a user of the handheld computer; an eye-tracking algorithm configured to determine, based on the tracking information, when the user of the handheld computer is looking at the screen and/or when the user is not looking at the screen; and an input modality positioned on a reverse side of the handheld computer, the input modality configured to receive a user input from a finger or hand of the user; wherein user input to the input modality is enabled only when the eye-tracking algorithm determines that the user is looking at the screen.

According to an embodiment, the system further comprises a haptic engine configured to provide haptic feedback to user input to the input modality.

According to an embodiment, the haptic engine is configured to only provide haptic feedback in response to user input when the eye-tracking algorithm determines that the user is looking at the screen.

According to an embodiment, enabled user input to the input modality is restricted to one axis of movement.

According to an embodiment, enabled user input to the input modality is restricted to two axes of movement.

According to an aspect, there is provided a method for controlling a handheld computer comprising a display, the method comprising:
receiving tracking information about one or more eyes of a user of the handheld computer;
determining, based on the received tracking information, when the user of the handheld computer is looking at the screen and/or when the user is not looking at the screen; and
receiving a user input from a finger or hand of the user at an input modality, the input modality positioned on a reverse side of the handheld computer;
wherein user input to the input modality is:
   enabled only when the eye-tracking algorithm determines that the user is looking at the screen; and/or
   restricted or blocked when the eye-tracking algorithm determines that the user is not looking at the screen.

According to an aspect of the invention, there is provided a computer program product comprising instructions which when executed by a processor cause the processor to perform any of the methods as described herein. The instructions may be stored on a memory, such as a non-transitory memory. The processor may be a processor in a computing system, such as for example a processor of the handheld computing system described herein.

It should be appreciated that all combinations of the foregoing concepts and additional concepts discussed in greater detail below (provided such concepts are not mutually inconsistent) are contemplated as being part of the inventive subject matter disclosed herein. In particular, all combinations of claimed subject matter appearing at the end of this disclosure are contemplated as being part of the inventive subject matter disclosed herein. It should also be appreciated that terminology explicitly employed herein that also may appear in any disclosure incorporated by reference should be accorded a meaning most consistent with the particular concepts disclosed herein.

These and other aspects of the various embodiments will be apparent from and elucidated with reference to the embodiment(s) described hereinafter.

### BRIEF DESCRIPTION OF THE DRAWINGS

In the drawings, like reference characters generally refer to the same parts throughout the different views. The figures showing features and ways of implementing various embodiments and are not to be construed as being limiting to other possible embodiments falling within the scope of the attached claims. Also, the drawings are not necessarily to scale, emphasis instead generally being placed upon illustrating the principles of the various embodiments.
Fig. 1 is a schematic representation of a user input system, in accordance with an embodiment.
Fig. 2 is a schematic representation of a user input system, in accordance with an embodiment.
Fig. 3 is a schematic representation of a user input system, in accordance with an embodiment.
Fig. 4 is a schematic representation of a user input system, in accordance with an embodiment.

### DETAILED DESCRIPTION OF EMBODIMENTS

The present disclosure describes various embodiments of a system and method for gaze-based control of a handheld computing device. More generally, applicant has recognized and appreciated that it would be beneficial to provide a method and system to help a user interact with a handheld computing device while both hands are occupied, while avoiding accidental or unintended interactions with the device. Accordingly, a user input system is described that includes a handheld computer comprising a display, an eye-tracking camera that obtains tracking information about one or more eyes of a user of the handheld computer, and an eye-tracking algorithm configured to analyze the gaze of the user. The system further includes an input modality positioned on a reverse side of the handheld computer configured to receive a user input from a finger or hand of the user. The user input to the input modality is restricted or blocked when the eye-tracking algorithm determines that the user is not looking at the screen.

The embodiments and implementations disclosed or otherwise envisioned herein can be utilized with any system that may utilize or benefit from interacting with a handheld computing device using gaze control. For example, one application of the embodiments and implementations disclosed or otherwise envisioned herein is ultrasound analysis using a handheld tablet held by one hand and an ultrasound transducer held by the other hand. One application is to improve the functionality of the Philips^{®} EPIQ^{®} and Lumify^{®} ultrasound systems, among other products. However, the disclosure is not limited to these devices or systems, and thus disclosure and embodiments disclosed herein can encompass any system that may utilize or benefit from interacting with a handheld computing device using gaze control.

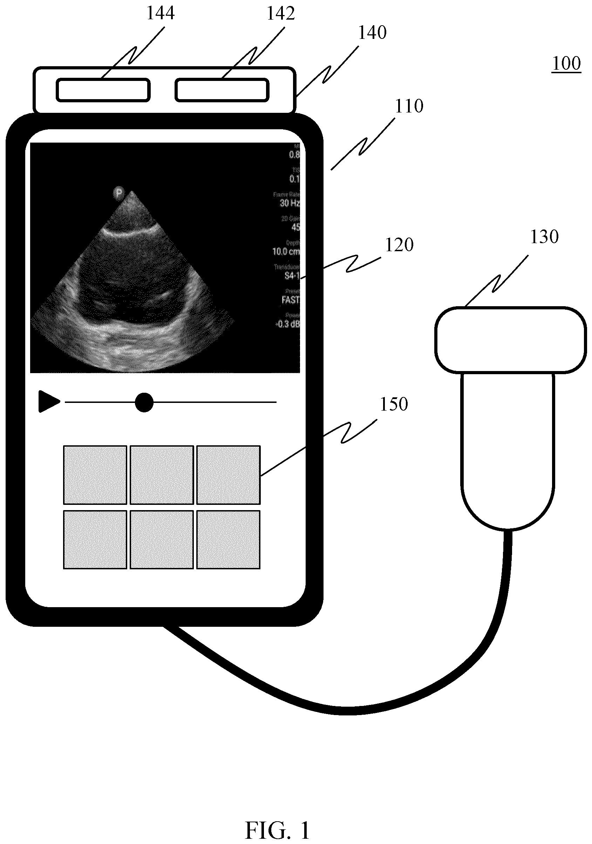

Referring to Fig. 1, in one embodiment, is a schematic representation of a user input system 100. In this embodiment, the user input system is a handheld ultrasound system such as the Philips^{®} Lumify^{®} system, but it can be any other handheld ultrasound system, or any other handheld system for which gaze control would be beneficial.

User input system 100 comprises a handheld computer 110, such as a tablet, smartphone, wearable device, or any other handheld computing device. The handheld computer 110 comprises a screen or display 120, which in this embodiment is utilized to display the ultrasound imaging obtained by a transducer 130, which is in wired and/or wireless communication with the handheld computer 110. The screen or display 120 also comprises user input or interaction section 150, which might include settings, options, parameters, or other adjustable options with which the user can interact.

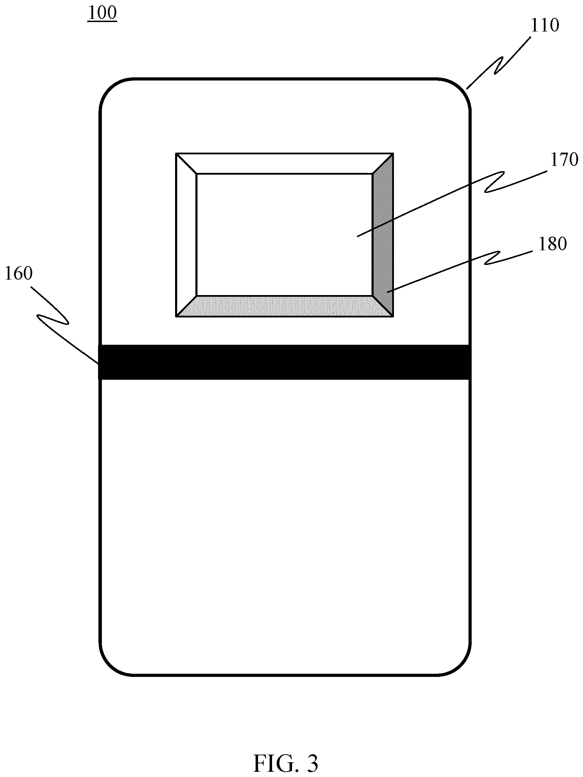

According to an embodiment, and referring to Fig. 3, the reverse side of the handheld computer 110 comprises an input modality or mechanism 170, such as a trackpad, via which the user provides user input. During use, the user holds the handheld computer 110 in one hand with one or more fingers interacting with the input modality 170. The input provided to the user interaction mechanism is received by the device, and translates to user interaction with the user input or interaction section 150. The user watches the user input or interaction section while interaction with the user input or interaction section. This allows the user to select or modify a setting, option, parameter, or other adjustable or selectable option in the user input or interaction section.

According to an embodiment, the reverse side of the handheld computer 110 comprises a strap 160 or other element that helps the user hold the device with one hand. During use, the user holds the handheld computer in one hand inserted into a space between the strap and the back of the device, with one or more fingers interacting with the user interaction mechanism.

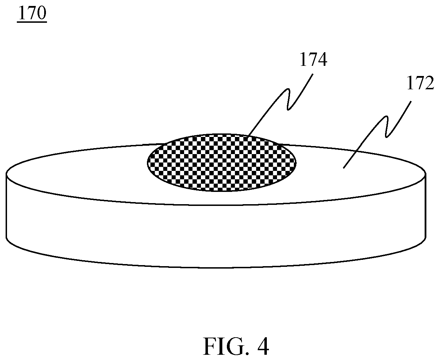

According to an embodiment, and referring to Fig. 4, the input modality 170 may be a trackball 174, positioned within/on a platform 172 which is attached or integrated into the reverse side of the handheld computer 110. The trackball may be textured or comprise any other design configured to enhance the user's interaction with the device. In addition to a trackpad and a trackball, the input modality 170 can be any other mechanism that allows the fingers of the user to provide input to the device, including but not limited to a trackpad, button, touchpad, or rotary.

Referring again to Fig. 1, the user input system 100 comprises an eye-tracking camera 140 that is configured to obtain tracking information about one or more eyes of a user of the handheld computer. The eye-tracking camera can be any system or device configured to track one or more eyes of the user in order to enable tracking of the gaze of the user. In one embodiment as described or otherwise envisioned herein, the sensor data from the eye-tracking camera will be utilized to determine when the user of the handheld computer is looking at the screen and/or when the user is not looking at the screen. The eye-tracking camera 140 may be integral to the handheld computer 110, or the eye-tracking camera may be a component added to the handheld computing device.

According to one embodiment, the eye-tracking camera is an infrared camera system. The infrared camera system comprises an infrared light source or emitter 142 that emits infrared light outward from the front side of the handheld computing device. The light may be emitted as bursts or as a continuous emission. When a user is looking at the front side of the handheld computing device, some of the emitted infrared light is absorbed by the user's pupil and some reflects off the iris, cornea, eyelid, or face. The reflected light is detected by an infrared light sensor 144, generating reflected infrared light data.

According to one embodiment, the user input system 100 comprises an eye-tracking algorithm (262), executed by for example a processor of the input system, which processor may be part of the handheld computer, and configured to determine, based on the tracking information, when the user of the handheld computer is looking at the screen and/or when the user is not looking at the screen. The eye-tracking algorithm utilizes the sensor data from the eye-tracking camera, such as the reflected infrared light data, to determine the gaze of the user. The eye-tracking algorithm can be any algorithm capable of analyzing the input data and determining the gaze of the user. According to an embodiment, the eye-tracking algorithm determines whether the user is looking at the screen, based on whether the gaze of the user is oriented toward the screen. Thus, the eye-tracking algorithm can determine when the user is not looking at the screen, based on whether the gaze of the user is not oriented toward the screen. According to an embodiment, the eye-tracking algorithm determines the specific portion of the screen to which the user's gaze is oriented. For example, the eye-tracking algorithm may determine that the user's gaze is oriented at the user input or interaction section 150. The eye-tracking algorithm may further determine that the user's gaze is oriented at a specific setting, option, parameter, or other adjustable or selectable option in the user input or interaction section.

According to an embodiment, the eye-tracking mechanism and the input modality 170 of the handheld computer 110 work cooperatively to control or modulate the user's interaction with the computer system, and particularly with the user input or interaction section 150. For example, according to one embodiment, user input to the input modality 170 is only enabled when the eye-tracking algorithm determines that the user is looking at the screen, or only enabled when the eye-tracking algorithm determines that the user is looking at a specific portion or section or region of the screen. Similarly, according to one embodiment, user input to the input modality 170 can be restricted or blocked when the eye-tracking algorithm determines that the user is not looking at the screen. Thus, the user input system 100 comprises an algorithm or other instructions that receive gaze information from the eye-tracking algorithm, and enables, restricts, and/or blocks user input into or from the input modality 170 based on one or more of whether the user is looking at the screen, whether the user is not looking at the screen, and/or whether the user is looking at a specific portion of the screen.

According to an embodiment, the system uses eye-tracking to determine which buttons or features on the screen of the device that the user wants to select. To toggle or confirm a button, change a value, or place a precise point (e.g., measurement) it is important to have a tactile button to avoid mistakes and compensate for the inherent imprecision of gaze tracking technology.

For example, it is challenging to change a value (e.g., depth/gain) or place an exact point (such as a measurement or color box movement) using gaze alone due to the technical limitations of a eye-tracking. Therefore, the system integrates a trackball or other input modality on the reverse of the tablet to enable interactions in combination with gaze.

According to an embodiment, in order to avoid interaction errors and to guide a user on what is possible while gazing at a feature, the system can change the physical behavior of the input modality and limit movement on different levels. For example, according to a first level of control, the system can comprise an algorithm or programming that disables the click button underneath the trackball when the eye-tracking algorithm determines that the user is not looking at the screen. Therefore, no input to the input modality is possible. According to a second level of control, the trackball (or other input modality) can only be clicked or otherwise provide user input when the eye-tracking algorithm determines that the user is looking at a specific section of the display, such as a toggle or clickable or interactable button. According to a third possible level of control, the input modality can be limited to, or enabled to, a single axis movement (x or y) when changing a value such as depth, gain, or any other value. According to a fourth possible level of control, the input modality can be limited to, or enabled to, two axis movement (x and y) for precision functionalities such as measurement, placement of icons, and so on.

According to an embodiment, the eye-tracking mechanism and the input modality 170 of the handheld computer 110 work cooperatively such that the user feels interactions with the device, such as feeling when a certain selected feature is selected or not selected, helping the user to learn how to use the system in the most efficient and user-friendly manner.

According to an embodiment, and referring to Fig. 3, the user input system 100 comprises a haptic engine 180 or other feedback mechanism that provides additional control or feedback information to the user. The haptic engine can be any haptic engine device or system or method configured to provide detectable feedback to the finger(s) or hand of the user.

According to an embodiment, the haptic engine provides feedback to a user by simulating clicking, simulating movement clicks or actions, or other feedback. For example, according to the first level of control described herein, the system can comprise an algorithm or programming that disables the click button (or other interaction mechanism) of the input modality 170 when the eye-tracking algorithm determines that the user is not looking at the screen. In this instance, the haptic engine can be controlled by the device such that it does not provide feedback when the user interacts with the input modality, since the user is not actively looking at the screen. This prevents inadvertent or accidental interaction with the handheld computing device, while also letting the user know that they cannot interact with the device because they are not looking at the device.

As another example, according to the second level of control described herein, the trackball (or other input modality) can only be clicked or otherwise provide user input when the eye-tracking algorithm determines that the user is looking at a specific section of the display, such as a toggle or clickable or interactable button. In this case, the haptic engine can be controlled by the device such that it does provide feedback when the user interacts with the input modality 170. That feedback can be a single feedback generated by the haptic engine, or it may be a variety of different feedback patterns and/or strengths depending on the user input, the specific section of the display the user is interacting with, and other variations.

As another example, according to the third level of control described herein, the input modality can be limited to, or enabled to, a single axis movement (x or y) when changing a value such as depth, gain, or any other value. In this case, the haptic engine can be controlled by the device such that it provides ticks or other haptic feedback when the user is causing, via input to the input modality, the device to move in the direction of the single axis. The haptic engine can similarly be controlled by the device such that it does not click or provide other haptic feedback when the user is causing, via input to the input modality, the device to move in the other axis. The system can be configured such that the user can only provide user input - that is, the movement along the single axis - when the eye-tracking algorithm determines that the user is looking at the display (and/or at a specific section of the display). For example, the system can comprise a setting or parameter that comprises a plurality of setting options ranging from 0 to 100. When the eye-tracking algorithm determines that the user is looking at the display in general, and/or when the eye-tracking algorithm determines that the user is looking at this variable setting on the display, movement along the single axis is enabled and the user can provide user input along that single axis. This will be an intuitive improvement and implementation for the user, as the user can feel or determine, via the input modality, what is possible with the setting or parameter (based on what is enabled by the system when the eye-tracking algorithm determines that the user is looking at the display and/or setting). For example, the user may feel, via the input modality, that the setting can be raised or lowered with the 0 to 100 range when the eye-tracking algorithm determines that the user is looking at the display and/or setting.

As another example, according to the fourth level of control described herein, the input modality can be limited to, or enabled to, two axis movement (x and y) for precision functionalities such as measurement, placement of icons, and so on. In this case, the haptic engine can be controlled by the device such that it provides ticks or other haptic feedback when the user is causing, via input to the input modality, the device to move in the direction of either axis. The haptic feedback may be the same for both directions, or it may differ for movement detected in the direction of each of the two different axes. The system can be configured such that the user can only provide user input - that is, the movement along the two axes - when the eye-tracking algorithm determines that the user is looking at the display (and/or at a specific section of the display). For example, the system can comprise a setting or parameter that can be adjusted in a y axis and an x axis. When the eye-tracking algorithm determines that the user is looking at the display in general, and/or when the eye-tracking algorithm determines that the user is looking at this variable setting on the display, movement along the two axes is enabled and the user can provide user input along those two axes. This will be an intuitive improvement and implementation for the user, as the user can feel or determine, via the input modality, what is possible with the setting or parameter (based on what is enabled by the system when the eye-tracking algorithm determines that the user is looking at the display and/or setting). For example, the user may feel, via the input modality, that the setting can be adjusted in the y-axis and the x-axis when the eye-tracking algorithm determines that the user is looking at the display and/or setting.

According to another embodiment, the user input system 100 comprises a servo motor control system 180 (or other mechanical control mechanism) to control movement of the input modality 170. For example, in this embodiment, the input modality may be a trackball or other movement component. The servo motors can be designed to move in and out to lock the movement component for horizontal or vertical movement, depending on what the gazed-at feature on the screen allows. The system can also comprise a servo motor (or other mechanical control mechanism) to create a block for a click button situated underneath the trackball mechanism to disable clicks when the user is not looking at the screen, and/or to enable the click button situated underneath the trackball mechanism to allow clicks when the user is looking at the screen. This results in an intuitive mechanism for a user to understand what is possible and to avoid mistakes in interaction.

According to another embodiment, the user input system 100 further comprises feedback via the user interface of the display or screen 120 to provide information to the user regarding which actions are possible in the current view or feature. The user can then feel and see, at the same time, the possible actions for the selected feature or function, which can guide the user's actions to avoid accidental interactions. The feedback can be any method for providing information to the user via a display or screen, such as highlighting the view, feature, or function at which the user is viewing based on eye-tracking, enlarging the view, feature, or function at which the user is viewing based on eye-tracking, or any other visual feedback mechanism.

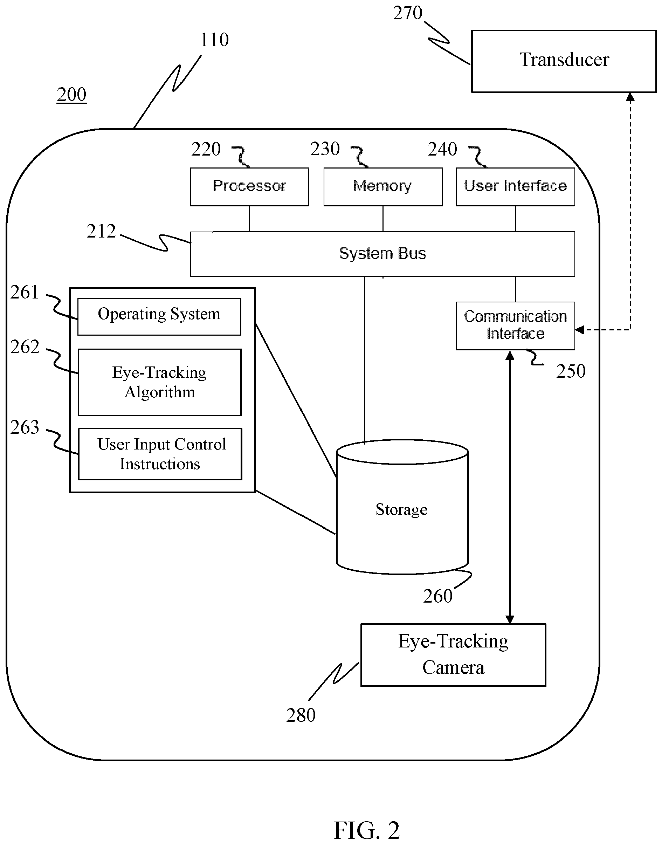

Referring to Fig. 2 is a schematic representation of a user input system 200. System 200 may be any of the systems described or otherwise envisioned herein, and may comprise any of the components described or otherwise envisioned herein. It will be understood that Fig. 2 constitutes, in some respects, an abstraction and that the actual organization of the components of the system 200 may be different and more complex than illustrated.

According to an embodiment, system 200 comprises a processor 220 capable of executing instructions stored in memory 230 or storage 260 or otherwise processing data to, for example, perform one or more steps of the method. Processor 220 may be formed of one or multiple modules. Processor 220 may take any suitable form, including but not limited to a microprocessor, microcontroller, multiple microcontrollers, circuitry, field programmable gate array (FPGA), application-specific integrated circuit (ASIC), a single processor, or plural processors.

Memory 230 can take any suitable form, including a non-volatile memory and/or RAM. The memory 230 may include various memories such as, for example L1, L2, or L3 cache or system memory. As such, the memory 230 may include static random-access memory (SRAM), dynamic RAM (DRAM), flash memory, read only memory (ROM), or other similar memory devices. The memory can store, among other things, an operating system. The RAM is used by the processor for the temporary storage of data. According to an embodiment, an operating system may contain code which, when executed by the processor, controls operation of one or more components of system 200. It will be apparent that, in embodiments where the processor implements one or more of the functions described herein in hardware, the software described as corresponding to such functionality in other embodiments may be omitted.

User interface 240 may include one or more devices for enabling communication with a user. The user interface can be any device or system that allows information to be conveyed and/or received, and may include a display, a mouse, and/or a keyboard for receiving user commands. In some embodiments, user interface 240 may include a command line interface or graphical user interface that may be presented to a remote terminal via communication interface 250. The user interface may be located with one or more other components of the system, or may located remote from the system and in communication via a wired and/or wireless communications network.

According to an embodiment, the device may comprise two or more user interfaces. For example, the user input system 200 may comprise the display or screen 120 on the front side of the handheld computing device, and may further comprise the input modality or mechanism 170 on the reverse or back side of the handheld computing device. The input modality or mechanism 170 may further comprise a haptic engine 180 or other feedback mechanism.

Communication interface 250 may include one or more devices for enabling communication with other hardware devices. For example, communication interface 250 may include a network interface card (NIC) configured to communicate according to the Ethernet protocol. Additionally, communication interface 250 may implement a TCP/IP stack for communication according to the TCP/IP protocols. Various alternative or additional hardware or configurations for communication interface 250 will be apparent.

Storage 260 may include one or more machine-readable storage media such as read-only memory (ROM), random-access memory (RAM), magnetic disk storage media, optical storage media, flash-memory devices, or similar storage media. In various embodiments, storage 260 may store instructions for execution by processor 220 or data upon which processor 220 may operate. For example, storage 260 may store an operating system 261 for controlling various operations of system 200.

It will be apparent that various information described as stored in storage 260 may be additionally or alternatively stored in memory 230. In this respect, memory 230 may also be considered to constitute a storage device and storage 260 may be considered a memory. Various other arrangements will be apparent. Further, memory 230 and storage 260 may both be considered to be non-transitory machine-readable media. As used herein, the term non-transitory will be understood to exclude transitory signals but to include all forms of storage, including both volatile and non-volatile memories.

While system 200 is shown as including one of each described component, the various components may be duplicated in various embodiments. For example, processor 220 may include multiple microprocessors that are configured to independently execute the methods described herein or are configured to perform steps or subroutines of the methods described herein such that the multiple processors cooperate to achieve the functionality described herein. Further, where one or more components of system 200 is implemented in a cloud computing system, the various hardware components may belong to separate physical systems. For example, processor 220 may include a first processor in a first server and a second processor in a second server. Many other variations and configurations are possible.

According to an embodiment, system 200 comprises or is in direct or indirect communication with an ultrasound transducer 270, or any other extension of the handheld computer 110. When utilized as an ultrasound imaging system, the ultrasound transducer is in wired and/or wireless communication with the handheld computer 110, and obtains ultrasound imagery or data which is communicated to the computer for display on the screen.

According to an embodiment, system 200 comprises or is in direct or indirect communication with an eye-tracking camera 280 that is configured to obtain tracking information about one or more eyes of a user of the handheld computer. The eye-tracking camera can be any system or device configured to track one or more eyes of the user in order to enable tracking of the gaze of the user. In one embodiment as described or otherwise envisioned herein, the eye-tracking camera is an infrared camera system. The infrared camera system comprises an infrared light source or emitter 142 that emits infrared light outward from the front side of the handheld computing device. The light may be emitted as bursts or as a continuous emission. When a user is looking at the front side of the handheld computing device, some of the emitted infrared light is absorbed by the user's pupil and some reflects off the iris, cornea, eyelid, or face. The reflected light is detected by an infrared light sensor 144, generating reflected infrared light data.

According to an embodiment, storage 260 of system 200 may store one or more algorithms, modules, and/or instructions to carry out one or more functions or steps of the methods described or otherwise envisioned herein. For example, storage 260 may comprise, among other instructions or data, eye-tracking algorithm 262, and user input control instructions 263.

According to an embodiment, the eye-tracking algorithm 262 directs the system to determine, based on tracking information received from an eye-tracking camera, when the user of the handheld computer is looking at the screen and/or when the user is not looking at the screen. The eye-tracking algorithm utilizes the sensor data from the eye-tracking camera, such as the reflected infrared light data, to determine the gaze of the user. The eye-tracking algorithm can be any algorithm capable of analyzing the input data and determining the gaze of the user. According to an embodiment, the eye-tracking algorithm determines whether the user is looking at the screen, based on whether the gaze of the user is oriented toward the screen. Thus, the eye-tracking algorithm can determine when the user is not looking at the screen, based on whether the gaze of the user is not oriented toward the screen. According to an embodiment, the eye-tracking algorithm determines the specific portion of the screen to which the user's gaze is oriented. For example, the eye-tracking algorithm may determine that the user's gaze is oriented at the user interface of the system. The eye-tracking algorithm may further determine that the user's gaze is oriented at a specific setting, option, parameter, or other adjustable or selectable option in the user input or interaction section.

According to an embodiment, the user input control instructions 263 control how the user interacts with the user interface of the display and the user interface of the input modality on the reverse side of the device. The control may be any of the mechanisms described or otherwise envisioned herein. For example, according to one embodiment, user input to the input modality 170 can only enabled by the user input control instructions 263 when the eye-tracking algorithm determines that the user is looking at the screen, or only enabled when the eye-tracking algorithm determines that the user is looking at a specific portion or section or region of the screen. Similarly, according to one embodiment, user input to the input modality 170 can be restricted or blocked by the user input control instructions 263 when the eye-tracking algorithm determines that the user is not looking at the screen. Thus, the user input control instructions 263 receive gaze information from the eye-tracking algorithm, and enable, restrict, and/or block user input into or from the input modality 170 based on one or more of whether the user is looking at the screen, whether the user is not looking at the screen, and/or whether the user is looking at a specific portion of the screen. According to an embodiment, the user input control instructions 263 further control a haptic engine which provides feedback to a user by simulating clicking, simulating movement clicks or actions, or other feedback. For example, the user input control instructions 263 can control the haptic engine to enable to disable a click button (or other interaction mechanism) of the input modality 170 based on the user's gaze, as described or otherwise envisioned herein.

All definitions, as defined and used herein, should be understood to control over dictionary definitions, definitions in documents incorporated by reference, and/or ordinary meanings of the defined terms.

The indefinite articles "a" and "an," as used herein in the specification and in the claims, unless clearly indicated to the contrary, should be understood to mean "at least one." In the claims, any reference signs placed between parentheses shall not be construed as limiting the claim. Measures recited in mutually different dependent claims may advantageously be used in combination.

The phrase "and/or," as used herein in the specification and in the claims, should be understood to mean "either or both" of the elements so conjoined, i.e., elements that are conjunctively present in some cases and disjunctively present in other cases. Multiple elements listed with "and/or" should be construed in the same fashion, i.e., "one or more" of the elements so conjoined. Other elements may optionally be present other than the elements specifically identified by the "and/or" clause, whether related or unrelated to those elements specifically identified.

As used herein in the specification and in the claims, "or" should be understood to have the same meaning as "and/or" as defined above. For example, when separating items in a list, "or" or "and/or" shall be interpreted as being inclusive, i.e., the inclusion of at least one, but also including more than one, of a number or list of elements, and, optionally, additional unlisted items. Only terms clearly indicated to the contrary will refer to the inclusion of exactly one element of a number or list of elements. In general, the term "or" as used herein shall only be interpreted as indicating exclusive alternatives (i.e. "one or the other but not both") when preceded by terms of exclusivity, such as "either," "one of."

As used herein in the specification and in the claims, the phrase "at least one," in reference to a list of one or more elements, should be understood to mean at least one element selected from any one or more of the elements in the list of elements, but not necessarily including at least one of each and every element specifically listed within the list of elements and not excluding any combinations of elements in the list of elements. This definition also allows that elements may optionally be present other than the elements specifically identified within the list of elements to which the phrase "at least one" refers, whether related or unrelated to those elements specifically identified.

It should also be understood that, unless clearly indicated to the contrary, in any methods claimed herein that include more than one step or act, the order of the steps or acts of the method is not necessarily limited to the order in which the steps or acts of the method are recited.

In the claims, as well as in the specification above, all transitional phrases such as "comprising," "including," "having," "containing," "involving," and the like are to be understood to be open-ended, i.e., to mean including but not limited to.

While several inventive embodiments have been described and illustrated herein, those of ordinary skill in the art will readily envision a variety of other means and/or structures for performing the function and/or obtaining the results and/or one or more of the advantages described herein, and each of such variations and/or modifications is deemed to be within the scope of the inventive embodiments described herein. More generally, those skilled in the art will readily appreciate that all parameters, dimensions, materials, and configurations described herein are meant to be exemplary and that the actual parameters, dimensions, materials, and/or configurations will depend upon the specific application or applications for which the inventive teachings is/are used. Those skilled in the art will recognize, or be able to ascertain using no more than routine experimentation, many equivalents to the specific inventive embodiments described herein. It is, therefore, to be understood that the foregoing embodiments are presented by way of example only and that, within the scope of the appended claims and equivalents thereto, inventive embodiments may be practiced otherwise than as specifically described and claimed. Inventive embodiments of the present disclosure are directed to each individual feature, system, article, material, kit, and/or method described herein. In addition, any combination of two or more such features, systems, articles, materials, kits, and/or methods, if such features, systems, articles, materials, kits, and/or methods are not mutually inconsistent, is included within the inventive scope of the present disclosure.

## Claims

1. A user input system (200), comprising:
a handheld computer (110) comprising a display (120);
an eye-tracking camera (140) configured to obtain tracking information about one or more eyes of a user of the handheld computer;
a processor configured to carry out an eye-tracking algorithm (262) configured to determine, based on the tracking information, when the user of the handheld computer is looking at the screen and/or when the user is not looking at the screen; and
an input modality (170) positioned on a reverse side of the handheld computer, the input modality configured to receive a user input from a finger or hand of the user;
wherein user input to the input modality is
enabled only when the eye-tracking algorithm determines that the user is looking at the screen; and/or
restricted or blocked when the eye-tracking algorithm determines that the user is not looking at the screen.

2. The user input system of claim 1, wherein the user input system is utilized for ultrasound control or analysis.

3. The user input system of any one of the preceding claims, further comprising a grip mechanism (160) enabling the user to hold the handheld computer with one hand, the one hand positioned to interact with the input modality.

4. The user input system of any one of the preceding claims, wherein the eye-tracking camera is an infrared camera.

5. The user input system of any one of the preceding claims, wherein the input modality is a trackball, trackpad, button, touchpad, or rotary.

6. The user input system of any one of the preceding claims, further comprising a haptic engine (180) configured to provide haptic feedback to user input to the input modality.

7. The user input system of claim 6, wherein the haptic engine is configured to only provide haptic feedback in response to user input when the eye-tracking algorithm determines that the user is looking at the screen.

8. The user input system of any one of the preceding claims, wherein the eye-tracking algorithm is further configured to determine, when the user of the handheld computer is looking at the screen, a specific portion of the screen the user is looking at, and wherein the user input to the input modality is enabled only when the user is looking at a predetermined specific portion of the screen.

9. The user input system of any one of the preceding claims, wherein enabled user input to the input modality is restricted to one axis of movement.

10. The user input system of any one of the preceding claims, wherein enabled user input to the input modality is restricted to two axes of movement.

11. A computer-implemented method for controlling a handheld computer (110) comprising a display (120), the method comprising:
receiving tracking information about one or more eyes of a user of the handheld computer;
determining, based on the received tracking information, when the user of the handheld computer is looking at the screen and/or when the user is not looking at the screen; and
receiving a user input from a finger or hand of the user at an input modality (170), the input modality positioned on a reverse side of the handheld computer;
wherein user input to the input modality is:
enabled only when the eye-tracking algorithm determines that the user is looking at the screen; and/or
restricted or blocked when the eye-tracking algorithm determines that the user is not looking at the screen.

12. The method of claim 11, further comprising providing haptic feedback to user input to the input modality via a haptic engine (180).

13. The method of claim 12, wherein the haptic feedback is only provided in response to user input when the eye-tracking algorithm determines that the user is looking at the screen.

14. The method of any one of claims 11 to 13, further comprising determining, when the user of the handheld computer is looking at the screen, a specific portion of the screen the user is looking at, and wherein the user input to the input modality is enabled only when the user is looking at a predetermined specific portion of the screen.

15. A computer program product comprising instructions which when executed by a processor cause the processor to carry out the method of any one of claims 11 to 14.
